# EUROPEAN PATENT SPECIFICATION

(11) **EP 3 443 508 B1**
(45) Date of publication and mention of the grant of the patent: **04.10.2023**
(21) Application number: 17709965.2
(22) Date of filing: 09.03.2017
(51) Int. Cl.: G06N 20/00

(54) **COMPUTER SYSTEM FOR DISTRIBUTED MACHINE LEARNING**
COMPUTERSYSTEM FÜR VERTEILTES MASCHINELLES LERNEN
SYSTÈME INFORMATIQUE POUR APPRENTISSAGE MACHINE DISTRIBUÉ

(43) Date of publication of application: 20.02.2019
(73) Proprietor: Huawei Technologies Co., Ltd., Longgang District Shenzhen, Guangdong 518129 (CN)
(72) Inventor: MELAMED, Zach, 80992 Munich (DE); WU, Zuguang, 80992 Munich (DE); TALYANSKY, Roman, 80992 Munich (DE); PETERFREUND, Natan, 80992 Munich (DE); VERNER, Uri, 80992 Munich (DE)
(74) Representative: Thun, Clemens
(86) International application number: PCT/EP2017/055602
(87) International publication number: WO 2018/162069

(56) References cited:
- JINLIANG WEI ET AL: "Managed communication and consistency for fast data-parallel iterative analytics", PROCEEDINGS OF THE SIXTH ACM SYMPOSIUM ON CLOUD COMPUTING, SOCC '15, 2015, pages 381-394, XP055401873, New York, New York, USA DOI: 10.1145/2806777.2806778 ISBN: 978-1-4503-3651-2
- ASIM KADAV ET AL: "ASAP: Asynchronous Approximate Data-Parallel Computation", ARXIV.ORG, CORNELL UNIVERSITY LIBRARY, 201 OLIN LIBRARY CORNELL UNIVERSITY ITHACA, NY 14853, 27 December 2016 (2016-12-27), XP080743117,
- LI YABIN ET AL: "More Effective Synchronization Scheme in ML Using Stale Parameters", 2016 IEEE 18TH INTERNATIONAL CONFERENCE ON HIGH PERFORMANCE COMPUTING AND COMMUNICATIONS; IEEE 14TH INTERNATIONAL CONFERENCE ON SMART CITY; IEEE 2ND INTERNATIONAL CONFERENCE ON DATA SCIENCE AND SYSTEMS (HPCC/SMARTCITY/DSS), IEEE, 12 December 2016 (2016-12-12), pages 757-764, XP033052470, DOI: 10.1109/HPCC-SMARTCITY-DSS.2016.0110 [retrieved on 2017-01-20]
- Joseph E Gonzalez ET AL: "Asynchronous Complex Analytics in a Distributed Dataflow Architecture", , 24 October 2015 (2015-10-24), XP055427261, Retrieved from the Internet: URL:https://arxiv.org/pdf/1510.07092.pdf [retrieved on 2017-11-21]
- KAMRAN SIDDIQUE ET AL: "Apache Hama: An Emerging Bulk Synchronous Parallel Computing Framework for Big Data Applications", IEEE ACCESS, vol. 4, 4 January 2017 (2017-01-04), pages 8879-8887, XP055427253, DOI: 10.1109/ACCESS.2016.2631549

## Description

### TECHNICAL FIELD

The present invention relates to a computer system and corresponding method for distributed training of a machine learning (ML) model. In particular, the system and method of the present invention extend a Bulk Synchronous Parallel (BSP) system to support asynchronous gradient computation in a Parameter Server (PS)-based distributed machine learning approach.

### BACKGROUND

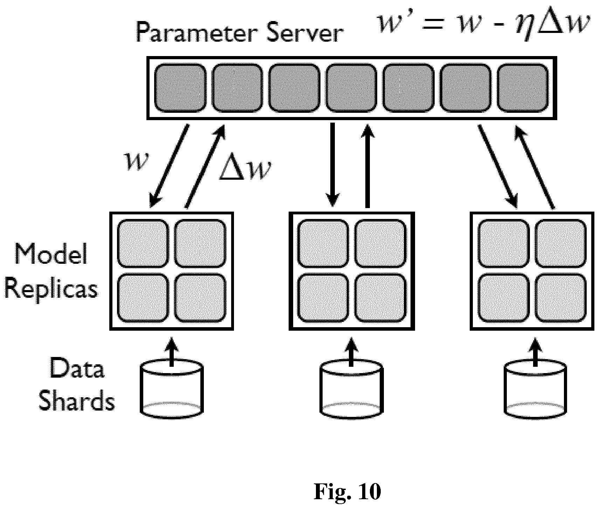

Today, distributed computation is required to speed up iterative training of large scale machine learning problems. In order to efficiently support, for instance, distributed model training, the model training process is distributed over a cluster, as is depicted in Fig. 10. A PS stores a major model replica over shards - namely a distributed set of machines in the cluster. The PS serves model sharing among distributed workers. Each machine in the cluster hosts one or more ML workers.

Each ML worker computes model updates, using the following iteration: First, the ML worker extracts a model replica (copy) M from the PS. Second, it computes a gradient of the model M, i.e. Δ*M*=*computeGrad(M).* Third, it updates the model in the PS based on the computed gradient: *M*+=Δ*M.*

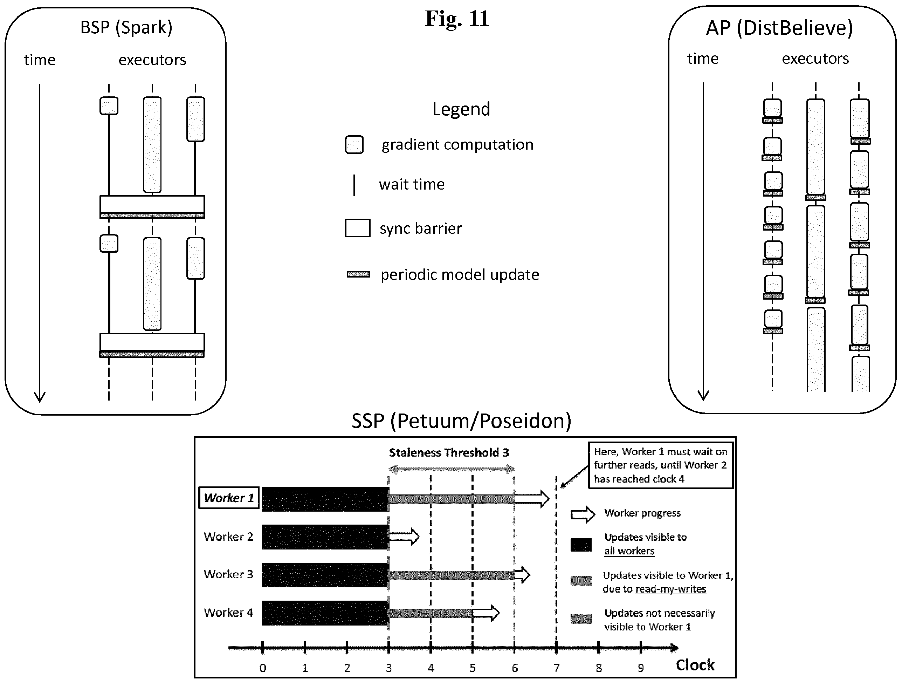

Three main approaches to build such a PS-based system exist up to date, these approaches being shown in Fig. 11. The first approach (upper left side) is BSP, the second approach (upper right side) is called Asynchronous Parallel (AP), and the third approach (bottom) is called Stale Synchronous Parallel (SSP).

The BSP system works in iterations, where an iteration consists of two phases: A computation phase and a synchronization barrier. During the computation phase, each worker (here labelled as executor) uses its local model replica and a part of training data to compute a gradient. At the synchronization barrier, the system waits until all workers complete their gradient computation. Then it uploads the computed gradients to the PS, and merges them with the PS model, i.e. the model residing in the PS. Subsequently, each worker downloads the current (updated) PS model, in order to start the next computation phase. Notably, at the synchronization barrier each worker is idle, and needs to wait for the updated PS model. Thus, the system resources are underutilized.

The AP system operates in a similar manner as the BSP system, except that the synchronization barrier is eliminated. Here, when a worker completes its computation of a gradient, it uploads the computed gradient to the PS, in order to merge it with the PS model. Then, it downloads the resulting updated PS model without synchronizing with other workers. While the AP solution thus eliminates the waiting at the synchronization barrier of the BSP system, it suffers from two different problems. Firstly, during the gradient upload and the merging of the uploaded gradient with the PS model, and also during the downloading of the updated PS model, the worker is idle, thus wasting resources. Secondly, the probably even more severe problem is that workers may merge *delayed* gradients on different models.

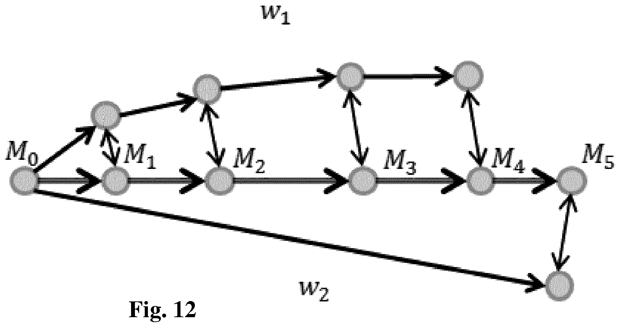

Fig. 12 demonstrates this problem in detail. Two workers w₁ and w₂ start from the same PS model M₀. After the faster worker w₁ computes, for instance, four gradients and accordingly advances the PS model by four steps in the model space, the slower worker w₂ computes only a single gradient, and adds it to the model M₄, which is already far advanced from the model M₀, on which the worker w₂ actually computed its gradient. It turns out that this merging of delayed gradients reduces the convergence rate, which significantly slows down the training process. Furthermore, the more a gradient merge is delayed, the more it affects the convergence rate.

The SSP system is a compromise of the BSP and AP systems, trying to solve the disadvantages of both. On the one hand side, it allows model replica at different workers to stale or diverge. On the other hand side, it bounds this model staleness by a so-called *staleness factor s.* To enforce bounded staleness, the SSP system introduces a local clock at each worker, wherein the clock amounts to a local iteration number at a worker. That is, a local clock of a worker is incremented each time the worker completes a single gradient computation. A faster worker is allowed to proceed with gradient computation only, if its local clock is at most *s* iterations beyond the clock of the slowest worker. Notably, too high values of the staleness factor *s* will lead to model staleness problems, while too small values of the staleness factor *s* will lead to too a high synchronization overhead. Thus, the SSP system achieves the highest convergence rate at a sweet spot value of the staleness factor *s* - not too high and not too low.

According to the above discussion, the advantages and disadvantages of the BSP and AP systems, respectively, become evident, and also how the SSP system leads to a compromise between the BSP and AP solutions.

However, while the AP and SSP solutions have significant performance advantages, as compared to the BSP solutions, the AP and SSP solutions are much harder to implement than the BSP solution. Currently, the AP and SSP solutions both require the construction of a specialized system. The BSP solution is much simpler to implement and also to use for programming use cases. Furthermore, today there exist a few mature open source BSP platforms, such as HADOOP and Apache Spark. All BSP solutions, however, suffer from system underutilization due to the synchronization barriers.

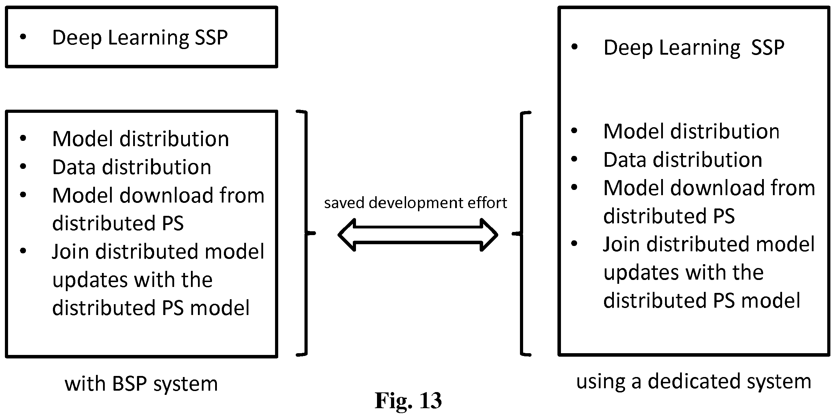

Therefore, combining the simplicity of a BSP system at workers and PS level with the performance advantages of an AP or SSP system at the workers level is highly desired. There is a particular need to leverage a mature BSP system, in order to construct an AP or SSP system. Fig. 13 indicates, how the development of an SSP system over a BSP system could save implementation of heavy distributed system core components, such as model and data distribution, merging gradients with distributed representation of PS model, and other components. The implementation of a dedicated SSP system on the other hand side, requires implementation of those components.

Many organizations are nowadays heavily based on existing BSP solutions. BSP-based asynchronous training systems lower an adoption barrier in such organizations. Today there are two major approaches. One approach leverages existing BSP systems to construct a BSP solution, e.g. CaffeOnSpark of Yahoo. Another approach is to construct a dedicated AP or SSP solution, such as CMU's Petuum or DistBelief over Google's TensorFlow.

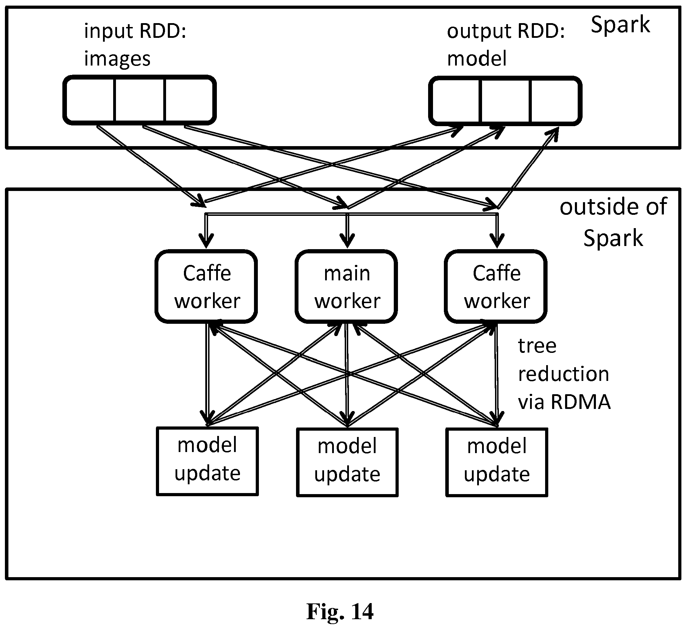

Fig. 14 shows a conventional architecture of a CaffeOnSpark system of Yahoo. Most of the system resides outside of Spark, and thus is a dedicated system without reusing Spark

### AMENDED DESCRIPTION

core distributed components. Furthermore, at the synchronization barrier, the gradients from each worker are transferred to all other workers, thereby generating a throughput requirement that is quadratic in the number of workers and, thus, is significantly limiting the scalability of the solution.

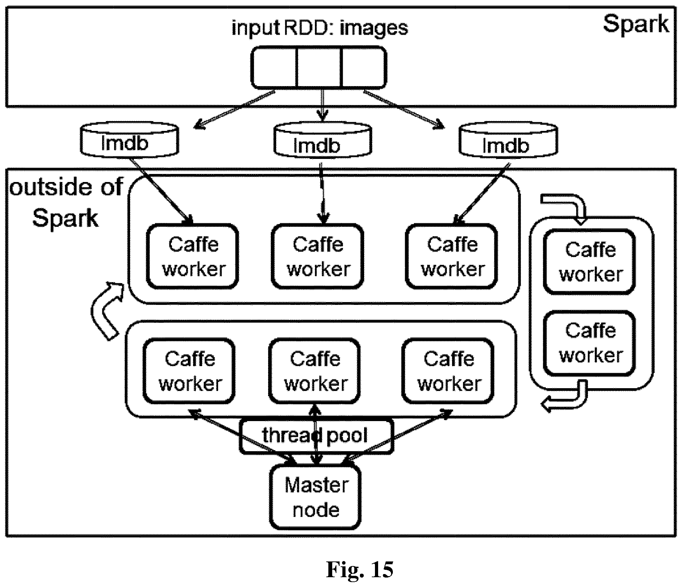

Fig. 15 shows a conventional architecture of a DeepSpark system from Seoul University. While this system implements of AP and SSP guarantees, it does not use Spark distributed components and, thus, it is a dedicated system. It also stores the PS model in a Master node, thereby limiting the scalability of the system due to the network bottleneck that is generated, when workers either upload model updates to the PS or download a PS model from the PS. Workers upload gradients to the Master node by means of a thread pool at the Master node, thereby further limiting scalability due to the limited size of the thread pool.

J. Wei et al: Managed Communication and Consistency for Fast Data-Parallel Iterative Analytics presents Bösen, a parameter server with a ML-consistent, bounded-staleness communication mechanism. The system comprises a client library, a server with several parameter server partitions, each partition comprising a consistency manager.

### SUMMARY

In view of the above-mentioned problems and disadvantages, the present invention aims to improve the conventional systems and methods. The present invention has thereby the object to provide a system, which combines the simplicity of a BSP system at the workers and PS level with the performance advantages of an AP or SSP system at the workers level. In particular, the high overhead at the synchronization barrier of a BSP system should be avoided. Also, the wasteful requirement of heavy distributed core capabilities in AP and SSP systems should be eliminated. In addition, the scalability of the system is to be improved over conventional systems. Moreover, gradient merge delays should be minimized, in order to improve the convergence rate.

The object of the present invention is achieved by the solution provided in the enclosed independent claims. Advantageous implementations of the present invention are further defined in the dependent claims.

In particular the present invention proposes a solution that uses a shared memory module to decouple asynchronous gradient computation at machine learning modules from a synchronous periodic model download and model update merge with the PS model. The shared memory module is used to synchronize these two components, and to facilitate a data flow between them.

The invention is set out in independent claims 1, 7 and 8. Preferred aspects of the invention are set out in the dependent claims.

The computer system of the first aspect uses the shared memory module to decouple asynchronous gradient computation by the at least one machine learning module from synchronous and periodic gradient read out by the BSP system. After computing a gradient based on the local model, the at least one machine learning module uses it to update the local model, and aggregates it into the aggregated gradient in the shared memory module. The next gradient is then computed on the updated local model. After computing this next gradient, the at least one machine learning module uses it to further update the local model, and aggregates it into the aggregated gradient in the shared memory module. The gradient read out is made to merge it with a PS model residing in the PS, and to subsequently update the local model by the updated PS model. The shared memory module is also used to synchronize the BSP system and the machine learning module, and to facilitate a data flow between these two components. Local models can be efficiently provided to the individual machine learning modules for training. Further, the PS model in the PS can be updated with the computed and aggregated gradients. The PS model update happens periodically after read out of a shared memory module, and is decoupled from the asynchronous gradient computations.

The computer system advantageously introduces specifically asynchrony at three levels: Firstly, each machine learning module (also called ML worker) runs independently from all other machine learning modules, i.e. calculates gradients without the need to wait for other machine learning modules. Secondly, the process of gradient collection - and consequently also of merging the gradients into the PS model is asynchronous with the gradient computation. Thirdly, the subsequent distribution of an updated PS model is asynchronous with the gradient computation. All these asynchrony levels in the system contribute to a significant reduction in wait times and, consequently, to a speeding up of the model training.

Further, the computer system of the first aspect allows using mature BSP systems, in order to rapidly implement systems for asynchronous training of machine learning models. Specifically, it allows reusing complex distributed components, thus saving time to implement them as compared to the implementation of dedicated asynchronous solutions. Actually, in the computer system of the first aspect, the only non-BSP components are the machine learning modules.

The computer system of the first aspect is highly scalable, due to its distributed approach, and due to the fact that data flows do not need to pass through a Master node.

The computer system of the first aspect also allows two further optimizations seamlessly: Firstly, it allows reassignment of cluster machines to host the PS model for a better load balancing on production clusters. Secondly, it allows an efficient gradient merge procedure, in order to increase network usage efficiency using tree-merge operation. Details of these optimizations are explained further below.

The computer system of the first aspect advantageously lowers adoption barriers in organizations, which are heavily based on existing BSP solutions.

Finally, the implementation of the computer system of the first aspect is simple, and the simplicity of its implementation results in very low implementation efforts and a higher stability.

In a first implementation form of the system according to the first aspect, the at least two machine learning modules are configured to compute a plurality of gradients based on the local model, and aggregate the plurality of gradients into the aggregated gradient stored in its associated shared memory module.

Therefore, when a shared memory module is read out, all gradients so far computed by the associated machine learning module are obtained in the form of the aggregated gradient. Machine learning modules can thus compute gradients with different computational speeds, without any wait times. That is, each machine learning module can, without having to wait for any other machine learning module, compute a gradient and aggregate it into the aggregated gradient, as soon as its computation is finalized.

In a further implementation form of the system according to the first aspect, each of the at least two machine learning module is configured to read training data from the BSP system; or the BSP system is configured to push training data to the at least two machine learning module via its associated shared memory module; and the at least two machine learning modules are configured to compute the gradient based on the local model and the training data.

The training data can thereby be distributed more efficiently to the machine learning modules, without introducing any wait times or delays.

In a further implementation form of the system according to the first aspect, each of the at least two machine learning modules is further configured to, when storing in its associated shared memory module the aggregated gradient, set a gradient available flag; and the central BSP control module is further configured to, when periodically instructing each of the at least two local BSP modules to read out its associated shared memory module, to instruct the at least two local BSP modules to read out an aggregated gradient only, if the gradient available flag is set.

Thereby, the overall system efficiency is improved.

In a further implementation form of the system according to the first aspect, the central BSP control module is further configured to instruct the at least two local BSP modules, when storing or updating the local model in its associated shared memory module, to set a model available flag; and the at least one machine learning module is further configured to read, from its associated shared memory module, the local model only, if the model available flag is set.

Thereby, the overall system efficiency is further improved.

In a further implementation form of the system according to the first aspect, the central BSP control module is further configured to instruct the at least two local BSP modules to store, in its associated shared memory module, a global minimum clock calculated based on clock information obtained from all machine learning modules; and the at least one machine learning module is further configured to read, from its associated shared memory module, the global minimum clock, and to interrupt, if a difference of its local clock and the global minimum clock exceeds a predefined threshold, its computation until the global minimum clock advances and a difference of its local clock and the global minimum clock is bounded by the predefined threshold.

Thus, it can be ensured that the local models do not become too stale, in order to avoid, for instance, that computed gradients are merged with a PS model only with a high delay. In essence, a controllable staleness factor is introduced into the computer system, achieving advantages of an SSP system.

It has to be noted that all devices, elements, units and means described in the present application could be implemented in the software or hardware elements or any kind of combination thereof. All steps which are performed by the various entities described in the present application as well as the functionalities described to be performed by the various entities are intended to mean that the respective entity is adapted to or configured to perform the respective steps and functionalities. Even if, in the following description of specific embodiments, a specific functionality or step to be performed by external entities is not reflected in the description of a specific detailed element of that entity which performs that specific step or functionality, it should be clear for a skilled person that these methods and functionalities can be implemented in respective software or hardware elements, or any kind of combination thereof.

### BRIEF DESCRIPTION OF DRAWINGS

The above described aspects and implementation forms of the present invention will be explained in the following description of specific embodiments in relation to the enclosed drawings, in which
- Fig. 1: shows a computer system according to an embodiment of the present invention.
- Fig. 2: shows a method according to an embodiment of the present invention.
- Fig. 3: shows a computer system according to an embodiment of the present invention.
- Fig. 4: shows a computer system according to an embodiment of the present invention over Apache Spark.
- Fig. 5: shows a method according to an embodiment of the present invention.
- Fig. 6: shows a computer system according to an embodiment of the present invention.
- Fig. 7: shows details of a gradient merge operation.
- Fig. 8: shows an optimization of the computer system and method according to embodiments of the present invention.
- Fig. 9: shows an optimization of the computer system and method according to embodiments of the present invention.
- Fig. 10: shows a conventional distributed model training process.
- Fig. 11: shows three conventional approaches for PS-based systems.
- Fig. 12: shows a problem of a conventional BSP system.
- Fig. 13: shows the advantages of an SSP system developed over a BSP system.
- Fig. 14: shows a conventional architecture of a CaffeOnSpark system.
- Fig. 15: shows a conventional architecture of a DeepSpark system from the Seoul University.

### DETAILED DESCRIPTION OF EMBODIMENTS

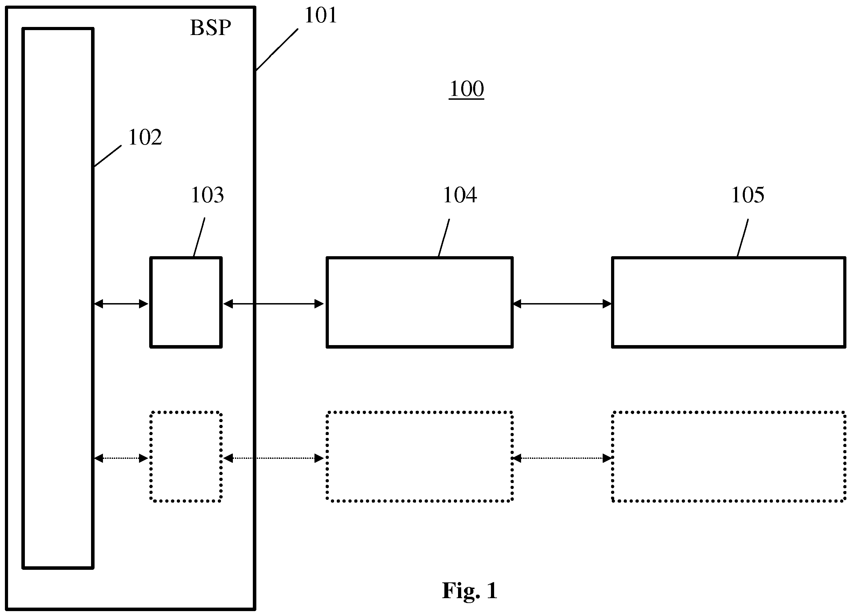

Fig. 1 shows a computer system 100 according to an embodiment of the present invention.

The computer system 100 is particularly suited for distributed training of a machine learning model. The computer system 100 comprises a BSP system 101, at least one machine learning module 105, and at least one shared memory module 104.

The BSP system 101 includes a central BSP control module 102 and at least two local BSP modules 103. The at least two machine learning modules 105 are associated with the local BSP modules 103. In case that more than two machine learning modules 105 are included in the computer system 100 (as exemplarily indicated by the dotted shapes in Fig. 1), then the same number of local BSP modules 103 is included in the system 100, and each machine learning module 105 is exactly associated with one local BSP module 103. Furthermore, the shared memory module 104 is associated with the pair of the local BSP module 103 and the machine learning module 105. In case that more machine learning modules 105 are present in the system 100, the same number of shared memory modules 104 is present in the system 100, and each shared memory module 104 is exactly associated with one pair of a local BSP module 103 and a machine learning module 105.

The central BSP control module 102 is configured to provide instruction to the at least two local BSP modules 103. The central BSP control module 102 is configured to instruct the at least two local BSP modules 103 to store, in its associated shared memory module 104, a local model. This local model may particularly be a copy or replica of a PS model residing in a PS that is to be trained by a distributed machine learning system.

The at least two machine learning modules 105 are accordingly configured to read, from its associated shared memory module 104, the stored local model, and are configured to compute a gradient based on the local model. Once the gradient is computed, the at least two machine learning modules 105 are configured to aggregate the gradient, preferably immediately after its computation, into an aggregated gradient in its associated shared memory module 104. The central BSP control module 102 is also configured to instruct the at least two BSP modules 103 to periodically read out its associated shared memory module 104, i.e. to read out the aggregated gradient stored therein. All shared memory modules 104 included in the computer system 100 could be read out with the same periodicity, but periodicities could also differ. For example, only those shared memory modules 104 can be read out, whose aggregated gradient is non-empty. After the local BSP module 103 reads out the aggregated gradient of a shared memory module 104, the aggregated gradient becomes empty, until the machine learning module 105 aggregates into it a new gradient that it has computed. Also shared memory modules 104 are read out asynchronously to gradient computation by the machine learning modules 105. The asynchronous gradient computation of the individual machine learning modules 105 is decoupled from the read out process by means of the shared memory module 104.

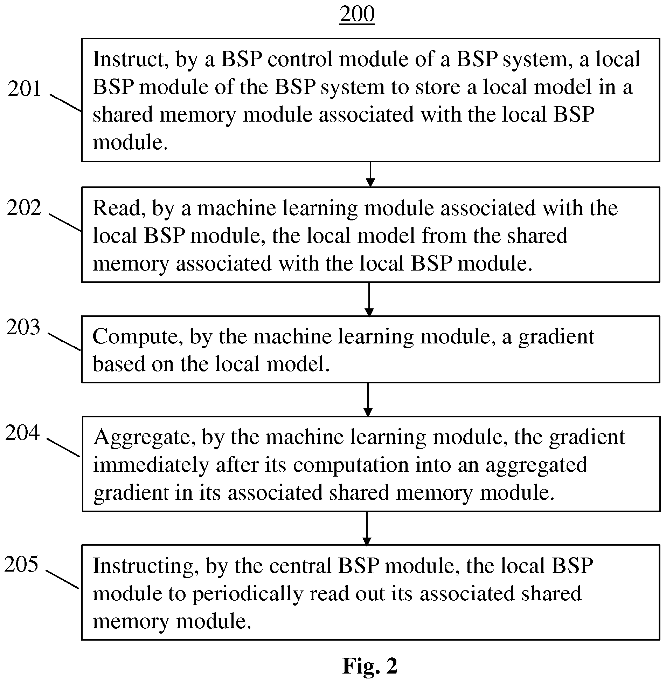

Fig. 2 is a method 200 according to an embodiment of the present invention. The method 200 corresponds to the system 100 of Fig. 1, and is accordingly for operating a computer system 100 for distributed training of a machine learning model.

The method 200 comprises a step of instructing 201, by a central BSP control module 102 of a BSP system 101, a local BSP module 103 of the BSP system 101 to store a local model in a shared memory module 104, the shared memory module 104 being associated with the local BSP module 103. Further, the method 200 comprises a step of reading 202, by a machine learning module 105 associated with the local BSP module 103, the local model from the shared memory module 104 associated with the local BSP module 103. The method 200 comprises another step of computing 203, by the machine learning module 105, a gradient based on the local model, and a step of aggregating 204, by the machine learning module 105, the gradient immediately after its computation into an aggregated gradient in its associated shared memory module 104. Finally, the method 200 comprises a step of instructing, by the central BSP module 102, the local BSP module 103 to periodically read out its associated shared memory module 104.

The aggregated gradient of a shared memory module is read out, in order to merge it with the PS model in the PS, and to subsequently update the local model by the updated PS model.

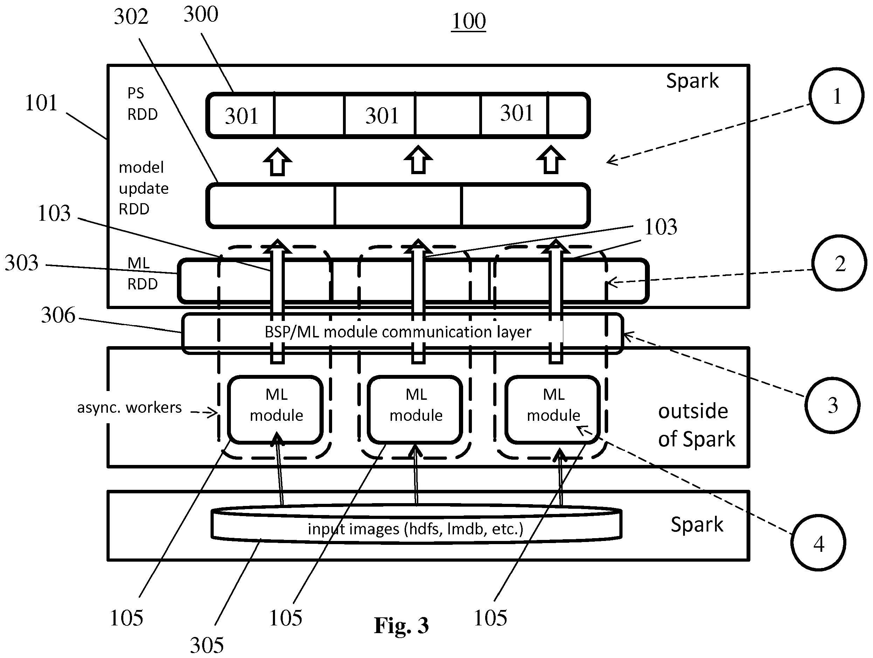

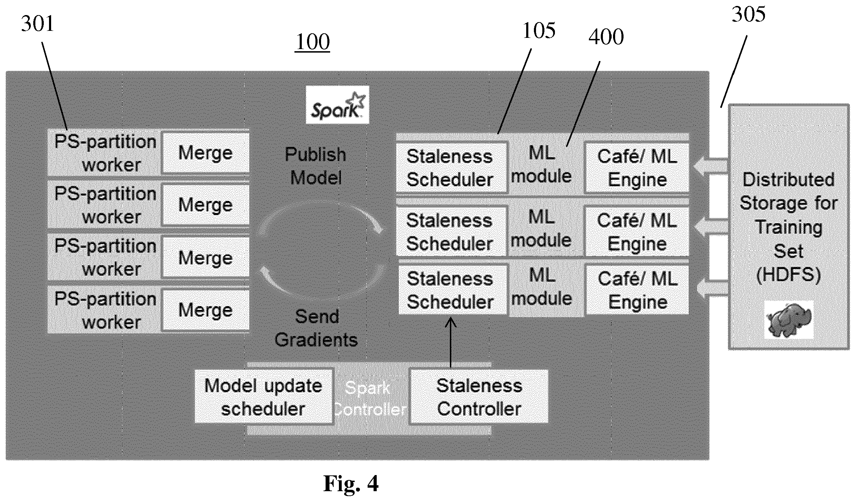

Fig. 3 presents a specific example architecture of a computer system 100 according to an embodiment the present invention, which builds on the embodiment of Fig. 1. The system 100 uses distributed components of the underlying BSP system 101. The only component that is outside of this BSP system 101 is the at least one external machine learning module 105 (indicated in Fig. 3 as three ML modules). As indicated in Fig. 3, the BSP system 101 may preferably be Spark. Fig. 4 shows in this respect a solution over specifically Apache Spark. Each ML module 105 runs a ML engine 400, for instance, Berkely Caffe as shown in Fig. 4.

The system 100 uses a distributed data set, preferably Spark Resilient Distributed Dataset (RDD), to store a PS model. This RDD storing the PS model is referred to as PS RDD 300. The PS model may be distributed between several machines of a cluster (these machines being indicated in Fig. 3 as the elements 301 of the PS RDD 300, and in Fig. 4 as PS-partition workers).

Further, a ML distributed data set, preferably a ML RDD 303, is used to control the ML modules 105. In other words, the ML modules 105 are organized in the ML RDD 303 that controls them. The distributed data set accordingly includes a number of elements that is the same as the number of ML modules 105. In other words, the ML RDD 303 is partitioned into a number of elements corresponding to the number of the ML modules 105 (see (2) in Fig. 3). Each element in the ML RDD 303 corresponds to a single local BSP module 103 that controls a ML module 105. In this way the BSP system 101 allocates one local BSP module 103 per ML module 105 to control it.

Each ML module 105 uses the local BSP module 103 to download a replica or copy of the PS model as local model at the request of said machine learning module 105. The data flow flows directly between ML modules 105 and the PS RDD 300. Since also all global metadata is stored along with the PS model, particularly in the part with ID 0, and since the global metadata contains the global clock information, the global clock info can also be downloaded to the ML modules 105 during downloading of the PS model copy or replica as local model. Each ML module 105 can use this clock information to enforce, for example, staleness guarantees.

Additionally, the ML module 105 preferably reads training data from a storage 305 by using BSP components. The training data may preferably be stored in a Hadoop distributed file system (HDFS) as shown in Fig. 4 as storage 305. Each ML module 105 may read its training data from the distributed file system, and may use it to produce gradients.

A ML module 105 then uses the local model, and preferably the obtained training data, to compute gradients (see (4) in Fig. 3). A gradient is computed based on the current local model. After computation of a gradient, it is used to update the local model and the next gradient is computed based on the updated (new current) local model. Each ML module 105 aggregates its computed gradients into an aggregated gradient. Several ML modules 105 compute gradients asynchronously as explained above. The BSP system 101 periodically issues a synchronous request to collect aggregated gradients from the individual machine learning modules 105, to upload them to the PS, and to merge them with the current PS model in the PS. In particular, the central BSP control module 102 (here also called Spark Master or BSP Master) periodically issues gradient merge operations, and broadcasts notifications on the availability of the new PS models. At such a request, aggregated gradients may be transferred into Spark in the form of a model update distributed data set (see (3) in Fig. 3). The model update may be injected into a model update RDD 302 of Spark via the ML RDD 303.

Thereby, the synchronous collection of aggregated gradients, and the asynchronous computation of gradients, is decoupled via a BSP/ML module communication layer 306 implemented on at least one shared memory module 104, one module 104 per pair of ML module 105 and local BSP module 103. The BSP system 101 subsequently uses a join operation (see (1) in Fig. 3) to merge the aggregated gradients from the model update RDD 302 into the PS distributed collection.

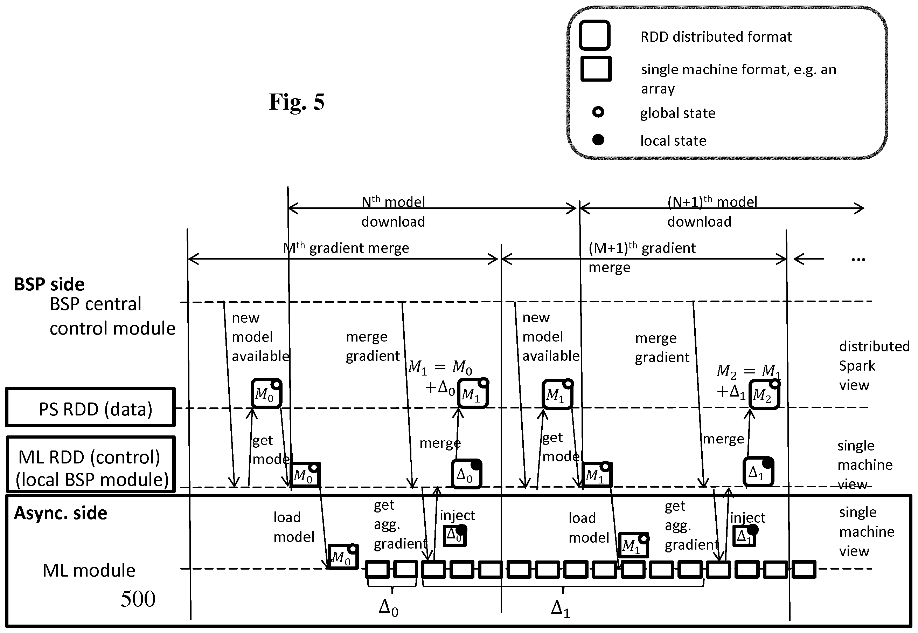

Fig. 5 shows the interaction diagram of the system 100 of the Figs. 3 and 4. The BSP central control module 102 initiates an iteration, broadcasting to all local BSP modules 103 a message on a new PS model availability. On receiving this message, the at least one local BSP module 103 downloads the new PS model *M*₀ from the PS distributed collection, and passes it as local model to the at least one ML module 105. Now the ML modules 105 can use this local model, and preferably the obtained training data, in order to compute gradients that are aggregated into an aggregated gradient referred to as Δ₀. Next, the BSP central control module 102 issues a periodic *merge* operation. During this operation, the local BSP module 103 transfers the aggregated gradient Δ₀ from the shared memory module 104 to its own memory, as part of a model update distributed data set, preferably a model update RDD 302. Further, it provides the aggregated gradient to a BSP join operation, in order to merge this aggregated gradient with the PS model. This concludes the current iteration. The next iteration starts, when the BSP central control module 102 broadcasts a message on availability of the new model *M*₁.

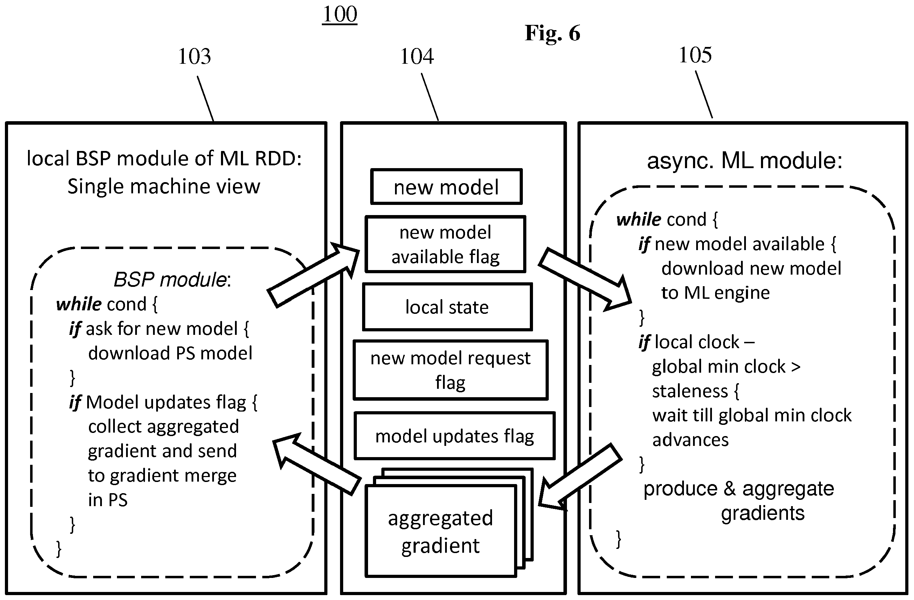

Fig. 6 shows a computer system 100 according to an embodiment of the present invention, which builds on the previous embodiments shown in Figs. 1, 3 or 4. In particular, Fig. 6 shows the communication between a local (synchronous) BSP module 103 and an asynchronous ML module 105. The communication is performed through the at least one shared memory module 104, and achieves a decoupling of the synchronous operation of the local BSP module 103 from the asynchronous gradient computation of the ML module 105. Also, the communication layer 306 serves to synchronize the communication between these two components: That is, the BSP system 101 in general, particularly the local BSP modules 103, and the asynchronously operating ML modules 105. Also, it facilitates data flow between the two components. The communication layer 306 is implemented by the shared memory module 104 for the above purposes.

A learning iteration starts, when the ML module 105 sets the `new model request' flag to ask the local BSP module 103 to download a PS model. When the local BSP control module 103 discovers that this flag is set, it downloads a PS model, stores it the shared memory 104 and preferably raises the `new model available' flag. When the ML module discovers that this flag is set, it copies the new model from the shared memory 104 into its own memory, and starts computing gradients using this model. When a new gradient is computed, the ML module 105 extracts the gradient from its own main memory , aggregates it in `aggregated gradient' within the shared memory 104, and preferably raises the `model updates flag'. Periodically the BSP central control module 102 issues a gradient merge operation. This operation arrives to each local BSP module 103. The local BSP module 103 checks the `model updates flag', and if it is set, it collects the aggregated gradients from the shared memory 104, and sends them to join with the PS model to complete the gradient merge process. When the local BSP module 103 downloads the new model, it preferably also downloads the global clock information and sets it into the `local state' of the shared memory 104. The asynchronous ML module 105 uses this information for staleness enforcement.

For instance, each local BSP module 103 may store in its associated shared memory module 104 a global minimum clock calculated based on clock information obtained from all ML modules 105. The ML module 105 reads the global minimum clock, and interrupts its computation, if a difference of its local clock and the global minimum clock exceeds a predefined threshold. The computation may be resumed, if the global minimum clock advances and a difference of its local clock and the global minimum clock is bounded by the predefined threshold.

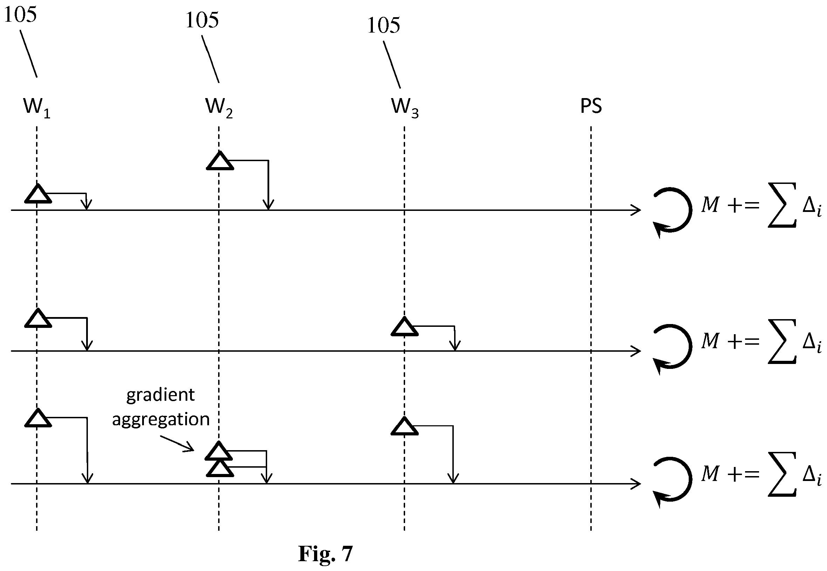

Fig. 7 shows the details of a gradient merge operation. In particular, Fig. 7 shows three ML modules 105, *w*₁, *w*₂ and *w*₃, and a PS. Each ML module 105 computes gradients based on a local model. Merge operations are shown as horizontal lines. If a ML module 105 computes more than one gradient between two successive gradient merge operations, these gradients are aggregated locally by each ML module 105 in the shared memory module 104. Periodically the BSP central control module 102 of the BSP system 101 issues gradient merge operations (horizontal lines). Each gradient merge operation gathers, from the shared memory module 104 of each ML module 105, its aggregated gradient, if the ML module 105 has aggregated gradients available. Next, all the gathered aggregated gradients are merged with the PS model to generate a new updated PS model. Now the PS broadcasts the message on the availability of the new model and local BSP modules 103 can download it as local models.

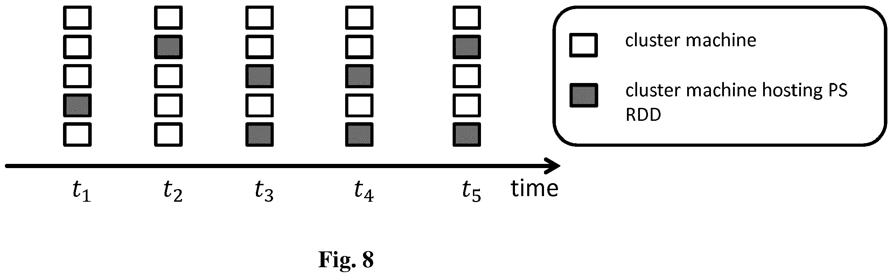

Fig. 8 shows a first optimization that the present invention allows. Each vertical bar in Fig. 8 represents a set of machines in a cluster at a specific point in time. In particular, each rectangle represents one cluster machine, which is configured to store a part of the PS model. The x axis shows the time. Each vertical bar shows a partitioning of the PS model after each gradient merge over the cluster machines: A darker rectangle shows a machine that hosts a part of the PS model. As Fig. 8 shows, at each gradient merge operation the BSP system 101 is allowed to move certain parts of the PS model to other machines. This optimization is particular effective when the same cluster serves several distributed applications and certain machines may become overloaded at different time periods. The BSP system 101 can, for example, move a part of the PS model from an overloaded machine to another, in order to balance the load better over all the cluster machines. Such an optimization is transparent in a BSP system 101 that takes into account load balancing when allocating machines to a new distributed data set. On the contrary, such optimization in a dedicated system requires a dedicated implementation of the optimization.

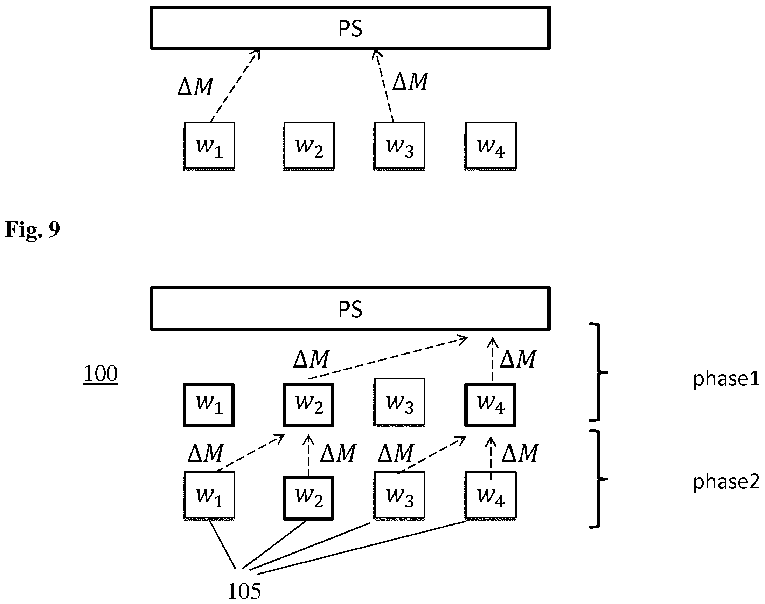

Fig. 9 introduces a second optimization that may be easily achieved in the computer systems 100 according to embodiments of the present invention. The optimization requires a dedicated implementation in a dedicated asynchronous system. Firstly, Fig. 9 shows (top side) a typical model update flow in an asynchronous dedicated system. Each ML module (worker) w₁, w₂ etc. sporadically uploads a gradient to the PS for gradient merge, as soon as it has computed it. In a large cluster this generates a high constant network load that may introduce long delays in the ML modules, which download a new PS model. This network load also delays uploading gradients, thus delaying exposition of those gradients to other ML modules, which further slows down the convergence rate of training the model. In contrast, Fig. 9 shows also (bottom side) that in the present computer systems 100 according to the present invention, all the aggregated gradients may be uploaded at once during a periodic gradient merge operation. During such operation, an efficient tree-merge may be used to increase network utilization and subsequently reduce network load.

The present invention has been described in conjunction with various embodiments as examples as well as implementations.

## Claims

1. A computer system (100) for distributed training of a machine learning model, the computer system (100) comprising:
a bulk synchronous parallel, BSP, system (101) including a central BSP control module (102) and at least two local BSP modules (103);
at least two machine learning modules (105), each associated with exactly one of the at least two local BSP modules (103); and
a shared memory module (104) associated with exactly one pair of a local BSP module (103) and a machine learning module (105);
wherein the central BSP control module (102) is configured to instruct the at least two local BSP modules (103) to store, in their associated shared memory module (104), a local model;
wherein each of the at least two machine learning modules (105) is configured to
read, from its associated shared memory module (104), the local model, compute a gradient based on the local model, and
aggregate the gradient after its computation into an aggregated gradient in its associated shared memory module (104); and
wherein each of the at least two local BSP modules (103) is configured to communicate with a parameter server, PS, in order to receive a PS model that is to be stored as the local model,
wherein the central BSP control module (102) is further configured to instruct the at least two local BSP modules (103) to periodically read out its associated shared memory module (104),
and, after each reading out the shared memory module of the periodically reading out the shared memory module, to provide, to the PS, the aggregated gradient for updating, in the PS, the PS model, wherein the PS model update is decoupled from the gradient computations;
wherein the central BSP control module (102) is configured to notify the at least two local BSP modules (103) on the availability of an updated PS model residing in the PS, and
each of the at least two local BSP modules (103) is configured to download the updated PS model from the PS and to use it to update the local model stored in its associated shared memory module (104).

2. The computer system (100) according to claim 1, wherein
each of the at least two machine learning modules (105) is configured to compute a plurality of gradients based on the local model, and
aggregate the plurality of gradients into the aggregated gradient stored in its associated shared memory module (104).

3. The computer system (100) according to claim 1 or 2, wherein
each of the at least two machine learning modules (105) is configured to read training data from the BSP system (101); or
the BSP system (101) is configured to push training data to the at least two machine learning modules (105) via its associated shared memory module (104); and
each of the at least two machine learning modules (105) is configured to compute the gradient based on the local model and the training data.

4. The computer system (100) according to any one of claims 1 to 3, wherein
each of the at least two machine learning modules (105) is further configured to, when storing in its associated shared memory module (104) the aggregated gradient, set a gradient available flag; and
the central BSP control module (105) is further configured to, when periodically instructing the at least two local BSP modules (103) to read out its associated shared memory module (104), to instruct the at least two local BSP modules (103) to read out an aggregated gradient only, if the gradient available flag is set.

5. The computer system (100) according to any one of claims 1 to 4, wherein
the central BSP control module (102) is further configured to instruct the at least two local BSP modules (103), when storing or updating the local model in its associated shared memory module (104), to set a model available flag; and
each of the at least two machine learning modules (105) is further configured to read, from its associated shared memory module (104), the local model only, if the model available flag is set.

6. The computer system (100) according to any one of claims 1 to 5, wherein the central BSP control module (102) is further configured to instruct the at least two local BSP modules (103) to store, in its associated shared memory module (104), a global minimum clock calculated based on clock information obtained from all machine learning modules (105); and each of the at least two machine learning modules (105) is further configured to read, from its associated shared memory module (104), the global minimum clock, and to interrupt, if a difference of its local clock and the global minimum clock exceeds a predefined threshold, its computation until the global minimum clock advances and a difference of its local clock and the global minimum clock is bounded by the predefined threshold.

7. A method (200) for operating a computer system (100) of any one of claims 1 to 6 for distributed training of a machine learning model, the method (200) comprising the steps of:
instructing (201), by the central bulk synchronous parallel, BSP, control module (102) of the BSP system (101), the at least two local BSP modules (103) of the BSP system (101) to store a local model in the shared memory module (104) associated with the respective local BSP module (103);
reading (202), by each of the machine learning modules (105) associated with the respective local BSP module (103), the local model from the shared memory module (104) associated with the local BSP module (103),
computing (203), by each of the machine learning modules (105), a gradient based on the local model,
aggregating (204), by each of the machine learning modules (105), the gradient after its computation into an aggregated gradient in its associated shared memory module (104);
receiving, by the at least two local BSP modules (103) from a parameter server, PS, a PS model that is to be stored as the respective local model;
instructing (205), by the central BSP module (102), the local BSP modules (103) to periodically read out its associated shared memory module (104); ; and
providing, by each of the at least two local BSP modules (103) after each reading out the shared memory module of the periodically reading out the shared memory module, to the PS, the aggregated gradient for updating, in the PS, the PS model, wherein the PS model update is decoupled from the gradient computations; and
notifying, by the central BSP control module (102), the at least two local BSP modules (103) on the availability of an updated PS module residing in the PS, and
downloading, by each of the at least two local BSP modules (103), the updated PS module from the PS and using it to update the local module stored in its associated shared memory module (104).

8. A computer program product comprising instructions which, when executed by the computer system of any one of claims 1 to 6, cause said computer system to carry out the method (200) of claim 7.

## Patentansprüche

1. Computersystem (100) zum verteilten Training eines Maschinenlernmodells, wobei das Computersystem (100) umfasst:
ein massensynchrones paralleles System, BSP-System, (101), das ein zentrales BSP-Steuermodul (102) und mindestens zwei lokale BSP-Module (103) beinhaltet;
mindestens zwei Maschinenlernmodule (105), die jeweils genau einem der mindestens zwei lokalen BSP-Module (103) zugeordnet sind; und
ein gemeinsam genutztes Speichermodul (104), das genau einem Paar eines lokalen BSP-Moduls (103) und eines Maschinenlernmoduls (105) zugeordnet ist;
wobei das zentrale BSP-Steuermodul (102) konfiguriert ist, um die mindestens zwei lokalen BSP-Module (103) anzuweisen, in ihrem zugeordneten gemeinsam genutzten Speichermodul (104) ein lokales Modell zu speichern;
wobei jedes der mindestens zwei Maschinenlernmodule (105) konfiguriert ist zum Lesen des lokalen Modells aus seinem zugeordneten gemeinsam genutzten Speichermodul (104),
Berechnen eines Gradienten basierend auf dem lokalen Modell und
Aggregieren des Gradienten nach seiner Berechnung zu einem aggregierten Gradienten in seinem zugeordneten gemeinsam genutzten Speichermodul (104); und
wobei jedes der mindestens zwei lokalen BSP-Module (103) konfiguriert ist, um mit einem Parameterserver, PS, zu kommunizieren, um ein PS-Modell zu empfangen, das als das lokale Modell gespeichert werden soll,
wobei das zentrale BSP-Steuermodul (102) ferner konfiguriert ist, um die mindestens zwei lokalen BSP-Module (103) anzuweisen, sein zugeordnetes gemeinsam genutztes Speichermodul (104) periodisch auszulesen,
und, nach jedem Auslesen des gemeinsam genutzten Speichermoduls des periodischen Auslesens des gemeinsam genutzten Speichermoduls, um dem PS den aggregierten Gradienten zum Aktualisieren des PS-Modells in dem PS bereitzustellen, wobei die PS-Modellaktualisierung von den Gradientenberechnungen abgekoppelt ist;
wobei das zentrale BSP-Steuermodul (102) konfiguriert ist, um die mindestens zwei lokalen BSP-Module (103) über die Verfügbarkeit eines aktualisierten PS-Modells zu benachrichtigen, das sich in dem PS befindet, und
jedes der mindestens zwei lokalen BSP-Module (103) konfiguriert ist, um das aktualisierte PS-Modell von dem PS herunterzuladen und es zu verwenden, um das in seinem zugeordneten gemeinsam genutzten Speichermodul (104) gespeicherte lokale Modell zu aktualisieren.

2. Computersystem (100) nach Anspruch 1, wobei
jedes der mindestens zwei Maschinenlernmodule (105) konfiguriert ist, um eine Vielzahl von Gradienten basierend auf dem lokalen Modell zu berechnen, und
Aggregieren der Vielzahl von Gradienten zu dem aggregierten Gradienten, der in seinem zugeordneten gemeinsam genutzten Speichermodul (104) gespeichert ist.

3. Computersystem (100) nach Anspruch 1 oder 2, wobei
jedes der mindestens zwei Maschinenlernmodule (105) konfiguriert ist, um Trainingsdaten aus dem BSP-System (101) zu lesen; oder
das BSP-System (101) konfiguriert ist, um Trainingsdaten über sein zugeordnetes gemeinsam genutztes Speichermodul (104) an die mindestens zwei Maschinenlernmodule (105) zu schieben; und
jedes der mindestens zwei Maschinenlernmodule (105) konfiguriert ist, um den Gradienten basierend auf dem lokalen Modell und den Trainingsdaten zu berechnen.

4. Computersystem (100) nach einem der Ansprüche 1 bis 3, wobei jedes der mindestens zwei Maschinenlernmodule (105) ferner konfiguriert ist, wenn der aggregierte Gradient in seinem zugeordneten gemeinsam genutzten Speichermodul (104) gespeichert ist, ein für Gradienten verfügbares Flag einzustellen; und
das zentrale BSP-Steuermodul (105) ferner konfiguriert ist, wenn es die mindestens zwei lokalen BSP-Module (103) periodisch anweist, sein zugeordnetes gemeinsam genutztes Speichermodul (104) auszulesen, die mindestens zwei lokalen BSP-Module (103) anzuweisen, nur einen aggregierten Gradienten auszulesen, falls das für Gradienten verfügbare Flag eingestellt ist.

5. Computersystem (100) nach einem der Ansprüche 1 bis 4, wobei das zentrale BSP-Steuermodul (102) ferner konfiguriert ist, um die mindestens zwei lokalen BSP-Module (103) anzuweisen, wenn das lokale Modell in seinem zugeordneten gemeinsam genutzten Speichermodul (104) gespeichert oder aktualisiert wird, um ein für Modelle verfügbares Flag einzustellen; und
jedes der mindestens zwei Maschinenlernmodule (105) ferner konfiguriert ist, um aus seinem zugeordneten gemeinsam genutzten Speichermodul (104) nur das lokale Modell auszulesen, falls das für Modelle verfügbare Flag eingestellt ist.

6. Computersystem (100) nach einem der Ansprüche 1 bis 5, wobei das zentrale BSP-Steuermodul (102) ferner konfiguriert ist, um die mindestens zwei lokalen BSP-Module (103) anzuweisen, in seinem zugeordneten gemeinsam genutzten Speichermodul (104) einen globalen minimalen Takt, der basierend auf Taktinformationen berechnet wird, die von allen Maschinenlernmodulen (105) erhalten werden; und jedes der mindestens zwei Maschinenlernmodule (105) ferner konfiguriert ist, aus seinem zugeordneten gemeinsam genutzten Speichermodul (104) den globalen minimalen Takt zu lesen und, falls eine Differenz zwischen seinem lokalen Takt und dem globalen minimalen Takt einen vordefinierten Schwellenwert überschreitet, seine Berechnung zu unterbrechen, bis der globale minimale Takt voranschreitet und eine Differenz seines lokalen Takts und des globalen minimalen Takts durch den vordefinierten Schwellenwert begrenzt wird.

7. Verfahren (200) zum Betreiben eines Computersystems (100) nach einem der Ansprüche 1 bis 6 zum verteilten Training eines Maschinenlernmodells, wobei das Verfahren (200) die Schritte umfasst:
Anweisen (201), durch das zentrale massensynchrone parallele Steuermodul, BSP-Steuermodul, (102) des BSP-Systems (101), der mindestens zwei lokalen BSP-Module (103) des BSP-Systems (101), ein lokales Modell in dem gemeinsam genutzten Speichermodul (104), das dem jeweiligen lokalen BSP-Modul (103) zugeordnet ist, zu speichern; Lesen (202), durch jedes der Maschinenlernmodule (105), die dem jeweiligen lokalen BSP-Modul (103) zugeordnet sind, des lokalen Modells aus dem gemeinsam genutzten Speichermodul (104), das dem lokalen BSP-Modul (103) zugeordnet ist,
Berechnen (203), durch jedes der Maschinenlernmodule (105), eines Gradienten basierend auf dem lokalen Modell,
Aggregieren (204), durch jedes der Maschinenlernmodule (105), des Gradienten nach seiner Berechnung zu einem aggregierten Gradienten in seinem zugeordneten gemeinsam genutzten Speichermodul (104);
Empfangen, durch die mindestens zwei lokalen BSP-Module (103) von einem Parameterserver, PS, eines PS-Modells, das als das jeweilige lokale Modell gespeichert werden soll; Anweisen (205), durch das zentrale BSP-Modul (102), der lokalen BSP-Module (103), sein zugeordnetes gemeinsam genutztes Speichermodul (104) periodisch auszulesen; und
Bereitstellen, durch jedes der mindestens zwei lokalen BSP-Module (103), nach jedem Auslesen des gemeinsam genutzten Speichermoduls des periodischen Auslesens des gemeinsam genutzten Speichermoduls, an den PS, den aggregierten Gradienten zum Aktualisieren des PS-Modells in dem PS, wobei die PS-Modellaktualisierung von den Gradientenberechnungen abgekoppelt ist;
Benachrichtigen, durch das zentrale BSP-Steuermodul (102), der mindestens zwei lokalen BSP-Module (103) über die Verfügbarkeit eines aktualisierten PS-Modells, das sich in dem PS befindet, und
Herunterladen, durch jedes der mindestens zwei lokalen BSP-Module (103), des aktualisierten PS-Moduls von dem PS und Verwenden dessen, um das gespeicherte lokale Modul, das in seinem zugeordneten gemeinsam genutzten Speichermodul (104) gespeichert ist, zu aktualisieren.

8. Computerprogrammprodukt, das Anweisungen umfasst, die, wenn sie durch das Computersystem nach einem der Ansprüche 1 bis 6 ausgeführt werden, bewirken, dass das Computersystem das Verfahren (200) nach Anspruch 7 vornimmt.

## Revendications

1. Système informatique (100) pour la formation distribuée d'un modèle d'apprentissage automatique, le système informatique (100) comprenant :
un système parallèle synchrone en masse, BSP, (101) comportant un module de commande BSP central (102) et au moins deux modules BSP locaux (103) ;
au moins deux modules d'apprentissage automatique (105), chacun associé à exactement l'un des au moins deux modules BSP locaux (103) ; et
un module de mémoire partagée (104) associé à exactement une paire d'un module BSP local (103) et d'un module d'apprentissage automatique (105) ;
dans lequel le module de commande BSP central (102) est configuré pour ordonner aux au moins deux modules BSP locaux (103) de stocker, dans leur module de mémoire partagée associé (104), un modèle local ;
dans lequel chacun des au moins deux modules d'apprentissage automatique (105) est configuré pour
lire, à partir de son module de mémoire partagée (104) associé, le modèle local, calculer un gradient en fonction du modèle local, et
agréger le gradient après son calcul en un gradient agrégé dans son module de mémoire partagée associé (104) ; et
dans lequel chacun des au moins deux modules BSP locaux (103) est configuré pour communiquer avec un serveur de paramètres, PS, afin de recevoir un modèle PS qui doit être stocké en tant que modèle local,
dans lequel le module de commande BSP central (102) est en outre configuré pour ordonner aux au moins deux modules BSP locaux (103) de lire périodiquement son module de mémoire partagée associé (104),
et, après chaque lecture du module de mémoire partagée de la lecture périodique du module de mémoire partagée, pour fournir, au PS, le gradient agrégé pour mettre à jour, dans le PS, le modèle PS, la mise à jour du modèle PS étant découplée des calculs de gradient ;
dans lequel le module de commande BSP central (102) est configuré pour notifier les au moins deux modules BSP locaux (103) de la disponibilité d'un modèle PS mis à jour résidant dans le PS, et
chacun des au moins deux modules BSP locaux (103) est configuré pour télécharger le modèle PS mis à jour à partir du PS et pour l'utiliser pour mettre à jour le modèle local stocké dans son module de mémoire partagée associé (104).

2. Système informatique (100) selon la revendication 1, dans lequel
chacun des au moins deux modules d'apprentissage automatique (105) est configuré pour calculer une pluralité de gradients en fonction du modèle local, et
agréger la pluralité de gradients en le gradient agrégé stocké dans son module de mémoire partagée associé (104).

3. Système informatique (100) selon la revendication 1 ou 2, dans lequel
chacun des au moins deux modules d'apprentissage automatique (105) est configuré pour lire des données de formation à partir du système BSP (101) ; ou
le système BSP (101) est configuré pour pousser des données de formation vers les au moins deux modules d'apprentissage automatique (105) par l'intermédiaire de son module de mémoire partagée associé (104) ; et
chacun des au moins deux modules d'apprentissage automatique (105) est configuré pour calculer le gradient en fonction du modèle local et des données de formation.

4. Système informatique (100) selon l'une quelconque des revendications 1 à 3, dans lequel chacun des au moins deux modules d'apprentissage automatique (105) est en outre configuré pour, lors du stockage dans son module de mémoire partagée associé (104) du gradient agrégé, définir un indicateur de gradient disponible ; et
le module de commande BSP central (105) est en outre configuré pour, lors de l'instruction périodique aux au moins deux modules BSP locaux (103) de lire son module de mémoire partagée associé (104), ordonner aux au moins deux modules BSP locaux (103) pour lire un gradient agrégé uniquement, si l'indicateur de gradient disponible est défini.

5. Système informatique (100) selon l'une quelconque des revendications 1 à 4, dans lequel le module de commande BSP central (102) est en outre configuré pour ordonner aux au moins deux modules BSP locaux (103), lors du stockage ou de la mise à jour du modèle local dans son module de mémoire partagée associé (104), pour définir un indicateur de modèle disponible ; et
chacun des au moins deux modules d'apprentissage automatique (105) est en outre configuré pour lire, à partir de son module de mémoire partagée associé (104), le modèle local uniquement, si l'indicateur de modèle disponible est défini.

6. Système informatique (100) selon l'une quelconque des revendications 1 à 5, dans lequel le module de commande BSP central (102) est en outre configuré pour ordonner aux au moins deux modules BSP locaux (103) de stocker, dans son module de mémoire partagée associé (104), une horloge minimale globale calculée en fonction des informations d'horloge obtenues à partir de tous les modules d'apprentissage automatique (105) ; et chacun des au moins deux modules d'apprentissage automatique (105) est en outre configuré pour lire, à partir de son module de mémoire partagée (104) associé, l'horloge minimale globale, et pour interrompre, si une différence de son horloge locale et de l'horloge minimale globale dépasse un seuil prédéfini, son calcul jusqu'à ce que l'horloge minimale globale avance et qu'une différence de son horloge locale et de l'horloge minimale globale soit limitée par le seuil prédéfini.

7. Procédé (200) destiné à faire fonctionner un système informatique (100) selon l'une quelconque des revendications 1 à 6 pour la formation distribuée d'un modèle d'apprentissage automatique, le procédé (200) comprenant les étapes consistant à :
ordonner (201), par le module de commande (102) parallèle synchrone en masse, BSP, central du système BSP (101), aux au moins deux modules BSP locaux (103) du système BSP (101) de stocker un modèle local dans le module de mémoire partagée (104) associé au module BSP local respectif (103) ; lire (202), par chacun des modules d'apprentissage automatique (105) associés au module BSP local respectif (103), le modèle local à partir du module de mémoire partagée (104) associé au module BSP local (103),
calculer (203), par chacun des modules d'apprentissage automatique (105), un gradient en fonction du modèle local,
agréger (204), par chacun des modules d'apprentissage automatique (105), le gradient après son calcul en un gradient agrégé dans son module de mémoire partagée associé (104) ;
recevoir, par les au moins deux modules BSP locaux (103) provenant d'un serveur de paramètres, PS, un modèle PS qui doit être stocké en tant que modèle local respectif ; ordonner (205), par le module BSP central (102), aux modules BSP locaux (103) de lire périodiquement son module de mémoire partagée associé (104) ; et
fournir, par chacun des au moins deux modules BSP locaux (103) après chaque lecture du module de mémoire partagée de la lecture périodique du module de mémoire partagée, au PS, le gradient agrégé pour mettre à jour, dans le PS, le modèle PS, la mise à jour du modèle PS étant découplée des calculs de gradient ; et
notifier, par le module de commande BSP central (102), les au moins deux modules BSP locaux (103) de la disponibilité d'un module PS mis à jour résidant dans le PS, et
télécharger, par chacun des au moins deux modules BSP locaux (103), le module PS mis à jour à partir du PS et l'utiliser pour mettre à jour le module local stocké dans son module de mémoire partagée associé (104).

8. Produit-programme informatique comprenant des instructions qui, lorsqu'elles sont exécutées par le système informatique de l'une quelconque des revendications 1 à 6, amènent ledit système informatique à réaliser le procédé (200) de la revendication 7.
